(19) Europäisches Patentamt
European Patent Office
Office européen des brevets

(11) EP 1 912 892 B1

(12) # EUROPÄISCHE PATENTSCHRIFT

(45) Veröffentlichungstag und Bekanntmachung des Hinweises auf die Patenterteilung:
**22.09.2010 Patentblatt 2010/38**

(21) Anmeldenummer: **06762429.6**

(22) Anmeldetag: **05.07.2006**

(51) Int Cl.:
***C01B 11/00*** *(2006.01)* ***C08K 3/16*** *(2006.01)*
***C08K 3/24*** *(2006.01)*

(86) Internationale Anmeldenummer:
**PCT/EP2006/006572**

(87) Internationale Veröffentlichungsnummer:
**WO 2007/003434 (11.01.2007 Gazette 2007/02)**

(54) **FESTE SALZZUBEREITUNG, DEREN HERSTELLUNG UND VERWENDUNG**

SOLID SALT PREPARATION, THE PRODUCTION THEREOF AND ITS USE

PREPARATION DE SEL SOLIDE, REALISATION ET UTILISATION ASSOCIEES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.07.2005 DE 102005031624**

(43) Veröffentlichungstag der Anmeldung:
**23.04.2008 Patentblatt 2008/17**

(73) Patentinhaber: **Baerlocher GmbH**
**85716 Unterschleissheim (DE)**

(72) Erfinder:
- **FOKKEN, Stefan**
  **85244 Biberbach (DE)**
- **REICHWALD, Frank**
  **80992 München (DE)**

(74) Vertreter: **Fiesser, Gerold Michael et al**
**Herzog Fiesser & Partner**
**Patentanwälte**
**Isartorplatz 1**
**80331 München (DE)**

(56) Entgegenhaltungen:
**WO-A-03/054072**

- **DATABASE CA [Online] CHEMICAL ABSTRACTS SERVICE, COLUMBUS, OHIO, US; HASHIZUME, KENICHI ET AL: "Antistatic heat and light stabilizers for halogenated polymers" XP002400839 gefunden im STN Database accession no. 1991:430628 -& JP 03 039346 A (JAPAN CARLIT CO., LTD., JAPAN) 20. Februar 1991 (1991-02-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 912 892 B1

## Beschreibung

Die vorliegende Erfindung betrifft eine feste Salzzubereitung mit verbesserter Handhabbarkeit, die eine Mischung aus einem Salz einer halogenhaltigen Oxysäure und einem Lösungsmittel enthält. Weiterhin betrifft die vorliegende Erfindung ein Verfahren zur Herstellung derartiger Salzzubereitungen sowie deren Verwendung, insbesondere in Stabilisatorzusammensetzungen für halogenhaltige Polymere.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten können.

Verschiedene Stabilisatorsysteme wurden vorgeschlagen, um halogenhaltige Polymere im Hinblick auf Langzeitschäden durch Einwirkung von Licht oder Wärme zu stabilisieren. So werden beispielsweise im Stand der Technik Systeme beschrieben, die Perchloratsalze zur Stabilisierung von halogenhaltigen Polymeren enthalten.

Nachteilig wirkt sich bei den beschriebenen Systemen jedoch häufig aus, dass nicht in allen Anwendungsfällen die angestrebte Stabilisierungswirkung im Hinblick auf die zu stabilisierenden Polymerer erzielt werden kann. Oft bleibt die Stabilisierungswirkung hinter den gestellten Anforderungen zurück.

Problematisch wirkt sich beim Einsatz von Perchloratsalzen weiterhin aus, dass solche empfindlichen Oxidationsmittel üblicherweise sehr vorsichtig gehandhabt werden müssen, um Gesundheitsschäden an Personen oder Beschädigungen von Material, beispielsweise aufgrund von Explosionen, zu vermeiden. Aus diesem Grund bestehen seitens der Anwender oft Vorbehalte bezüglich des Einsatzes von Perchloratsalzen in Stabilisatorzusammensetzungen. Daher wurden verschiedene Lösungen vorgeschlagen wie solche perchlorathaltigen Stabilisatorzusammensetzungen im Hinblick auf ihre Handhabbarkeit verbessert werden können.

Beispielsweise beschreibt die EP-B 0 457 471 eine Stabilisatorzusammensetzung, die Perchlorat, Calciumsilikat und Calciumcarbonat enthält. Zur Herstellung der beschriebenen Stabilisatorzusammensetzungen wird- eine wässrige Lösung von Natriumperchlorat mit Calciumsilikat oder einem Gemisch aus Calciumsilikat und Calciumcarbonat vermischt. Problematisch wirkt sich bei den beschriebenen Stabilisatorzusammensetzungen aus, dass sie immer noch Kristallite von Natriumperchlorat enthalten. Diese Kristallite können, wie bereits oben beschrieben, gegebenenfalls bei der Handhabung Probleme aufwerfen. Darüber hinaus lassen sich derartige Stabilisatorzusammensetzungen in einigen Fällen nicht ausreichend homogen in einem zu stabilisierenden halogenhaltigen Polymeren einarbeiten. Weiterhin schränkt das Vorliegen eines Trägermaterials oft die Stabilisatorwirkung im Vergleich zu anderen Stabilisatorzusammensetzungen ein. Darüber hinaus weist das im beschriebenen Fall eingesetzte Calciumsilikat eine hohe Mohs'sche Härte auf, wodurch Verarbeitungsanlagen unter Umständen dauerhaft geschädigt werden können.

Es bestand daher ein Bedürfnis, die Leistungsfähigkeit von Stabilisatorzusammensetzungen, die ein Salz einer halogenhaltigen Oxysäure enthalten, zu verbessern. Insbesondere bestand ein Bedürfnis, die Leistungsfähigkeit von Stabilisatorzusammensetzungen, die ein Salz einer halogenhaltigen Oxysäure enthalten, im Hinblick auf die und Thermostabilität der zu stabilisierenden halogenhaltigen Polymeren zu verbessern.

Aufgrund der Probleme hinsichtlich der Handhabbarkeit von Perchloratsalzen bzw. von auf diesen basierenden Zubereitungen bestand weiterhin ein Bedarf nach solchen Zubereitungen, die ein Salz einer halogenhaltigen Oxysäure in einer Konfektionierung enthalten, die eine Gefahr beim Umgang mit solchen Perchloratsalzen deutlich verringert.

Obwohl aus dem Stand der Technik Zubereitungen bekannt sind, die Perchloratsalze in Form einer flüssigen Lösung in Wasser oder beispielsweise Butyldiglykol umfassen, sind derartige flüssige Zubereitungen jedoch in vielen Fällen hinsichtlich ihrer Einsatzmöglichkeiten, beispielsweise in Stabilisatorzusammensetzungen für halogenhaltige Polymere, beschränkt. In vielen Fällen entspricht es dem Wunsch des Formulierers solcher Stabilisatorzusammensetzungen, dass entsprechende Perchloratsalze der Stabilisatorzusammensetzung in fester Form, also als feste Salzzubereitungen, beigefügt werden, um bei der Einstellung der Konsistenz der Stabilisatorzusammensetzung möglichst große Formulierungsfreiheit zu haben. Flüssige Perchloratsalze entsprechen diesem Wunsch oft nicht.

Der vorliegenden Erfindung liegt daher die Aufgabe zugrunde, derartige feste Salzzubereitungen und auf diesen basierende Stabilisatorzusammensetzungen sowie Verfahren zu deren jeweiliger Herstellung zur Verfügung zu stellen.

Gelöst werden die der Erfindung zugrunde liegenden Aufgaben durch Salzzubereitungen und Stabilisatorzusammensetzungen, die solche Salzzubereitungen enthalten, sowie Verfahren zu deren Herstellung, wie sie im Rahmen des nachfolgenden Textes beschrieben sind.

Die vorliegende Erfindung stellt Salzzubereitungen zur Verfügung, die eine einfache Handhabung von Perchloratsalzen ermöglichten. Über die Handhabung von Perchloratsalzen hinaus lassen sich die erfindungsgemäßen Vorteile jedoch grundsätzlich bei allen Salzen halogenhaltiger Oxysäuren erzielen, beispielsweise auch bei Chloriten, Hypochloriten, Chloraten, Bromaten, Jodaten, Perbromaten und der gleichen.

Gegenstand der vorliegenden Erfindung ist daher eine Salzzubereitung, mindestens enthaltend ein Salz einer halogenhaltigen Oxysäure oder ein Gemisch aus zwei oder mehr Salzen halogenhaltiger Oxysäuren und ein Lösungsmittel oder ein Gemisch aus zwei oder mehr Lösungsmitteln, wobei das Salz einer halogenhaltigen Oxysäure oder das Gemisch aus zwei oder mehr Salzen halogenhaltiger Oxysäuren in dem Lösungsmittel oder dem Gemisch aus zwei oder mehr Lösungsmitteln bei 20 °C zu mindestens 0,1 Gew.-%, bezogen auf das Lösungsmittel oder das Gemisch aus zwei oder mehr Lösungsmitteln, löslich ist und die Salzzubereitung bei 5 °C fest ist. Gemäß weiterer Ausführungsformen ist eine erfindungsgemäße Salzzubereitung bei 80 °C oder bei 60 °C oder bei 50 °C oder bei 40 °C oder bei 30 °C oder bei 20 °C oder bei 10 °C oder bei 5 °C oder bei 0 °C fest.

Eine erfindungsgemäße Salzzubereitung weist also mindestens zwei Bestandteile auf. Als einen ersten Bestandteil enthält eine erfindungsgemäße Salzzubereitung mindestens ein Salz einer halogenhaltigen Oxysäure, insbesondere ein Perchlorat der allgemeinen Formel $M(ClO_4)_k$, wobei M für ein geeignetes anorganisches oder organisches Kation steht. Der Index k steht entsprechend der Wertigkeit von M für die Zahl 1, 2 oder 3. Erfindungsgemäß geeignete anorganische Kationen M sind beispielsweise Li, Na, K, Mg, Ca, Sr, Zn, Al, La, Ce oder $NH_4$.

Als erfindungsgemäß geeignete organische Kationen M sind beispielsweise organische Onium-Ionen zu nennen, wobei unter dem Begriff "organisches Onium-Ion" im Rahmen des vorliegenden Textes Ammonium-, Sulfonium- oder Phosphonium-Ionen verstanden werden, die jeweils mindestens einen organischen Rest tragen. Ein entsprechendes Oniumsalz gemäß der vorliegenden Erfindung kann dabei, je nach Art der Oniumgruppe, 1, 2, 3 oder 4 organische Reste tragen. Die organischen Reste können dabei beispielsweise über eine C-X-Verknüpfung, wobei X für N, S oder P steht, mit einem positiv geladenen N-, S- oder P-Atom eines erfindungsgemäßen Onium-Ions verbunden sein. Es ist jedoch ebenso möglich, dass die organischen Reste über ein weiteres Heteroatom, beispielsweise ein O-Atom, mit einem positiv geladenen N-, S- oder P-Atom eines erfindungsgemäßen Onium-Ions verbunden sind.

Ein im Rahmen der vorliegenden Erfindung als Bestandteil einer erfindungsgemäßen Salzzubereitung geeignetes Oniumperchlorat weist beispielsweise ein positiv geladenes N-, S-oder P-Atom oder zwei oder mehr solcher positiv geladener N-, S- oder P-Atome oder Gemische aus zwei oder mehr der genannten, positiv geladenen Atomtypen auf.

Im Rahmen der vorliegenden Erfindung sind als Oniumperchlorate Verbindungen geeignet, die am N, S oder P-Atom mindestens einen organischen Rest und höchstens die maximal mögliche Zahl an organischen Resten tragen. Wenn ein erfindungsgemäß geeignetes Oniumperchlorat weniger organische Reste trägt als zur Ausbildung eines positiv geladenen Oniumions notwendig sind, so wird die positive Ladung in üblicher, dem Fachmann bekannter Weise beispielsweise durch Protonierung mittels einer geeigneten Säure erzeugt, so dass das entsprechende Oniumperchlorat in diesem Fall neben einem organischen Rest noch mindestens ein Proton trägt.

Es sind erfindungsgemäß daher also Verbindungen als Oniumperchlorate geeignet, die aufgrund von Protonierungsreaktionen eine positive Ladung aufweisen. Es ist jedoch ebenso möglich, im Rahmen der erfindungsgemäßen Salzzubereitungen oder Stabilisatorzusammensetzungen Oniumperchlorate einzusetzen, die aufgrund einer Alkylierungs- oder Peralkylierungsreaktion eine positive Ladung aufweisen. Beispiele für derartige Verbindungen sind Tetraalkylammonium-, Trialkylsulfonium- oder Tetraalkylphosphoniumperchlorate. Es ist jedoch im Rahmen der vorliegenden Erfindung ebenso vorgesehen, dass ein erfindungsgemäß geeignetes Oniumperchlorat einen Aryl-, Alkaryl-, Cycloalkyl-, Alkenyl-, Alkinyl- oder Cycloalkenylrest aufweist. Es ist erfindungsgemäß ebenso möglich und vorgesehen, dass ein im Rahmen einer erfindungsgemäßen Salzzubereitung einsetzbares Oniumsalz zwei oder gegebenenfalls mehr unterschiedliche Substituententypen aufweist, beispielsweise einen Alkyl- und einen Cycloalkylrest oder einen Alkyl- und einen Arylrest.

Es ist im Rahmen der vorliegenden Erfindung ebenso möglich und vorgesehen, dass ein im Rahmen einer erfindungsgemäßen Salzzubereitung einsetzbares Oniumsalz Substituenten aufweist, die ihrerseits durch eine oder mehrere funktionelle Gruppen substituiert sind. Als "funktionelle Gruppen" werden dabei Gruppen bezeichnet, welche die Wirkungen der Salzzubereitung oder Stabilisatorzusammensetzung verbessern oder zumindest nicht oder nur unwesentlich verschlechtern. Entsprechende funktionelle Gruppen können beispielsweise NH-Gruppen, $NH_2$-Gruppen, OH-Gruppen, SH-Gruppen, Estergruppen, Ethergruppen, Thioethergruppen, Isocyanuratgruppen oder Ketogruppen oder Gemische aus zwei oder mehr davon sein.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat führen. Dabei können erfindungsgemäß einsetzbare Phosphoniumperchlorate beispielsweise durch entsprechende Umsetzung von Tetraalkyl-, Tetracycloalkyl- oder Tetraarylphosphorhalogeniden erhalten werden. Geeignete Phosphoniumperchlorate leiten sich daher beispielsweise von Tetraalkylphosphorsalzen wie Tetra-n-ethylphosphoniumbromid, Tetra-n-propylphosphoniumbromid, Tetra-n-butylphosphoniumbromid, Tetra-n-isobutylphosphoniumbromid, Tetra-n-pentylphosphonium-bromid, Tetra-n-hexylphosphoniumbromid und dergleichen Tetraalkylphosphorsalzen ab.

Weiterhin eignen sich grundsätzlich zum Einsatz im Rahmen der erfindungsgemäßen Salzzubereitungen Phosphoniumperchlorate, die sich beispielsweise von Tetracycloalkylphosphorsalzen oder Tetraarylphosphorsalzen ableiten. Geeignete Phosphoniumperchlorate basieren daher beispielsweise auf Tetracycloalkyl- oder Tetraarylphosphorsalzen wie Tetracyclohexylphosphoniumbromid oder Tetraphenylphosphoniumbromid und dergleichen Tetracycloalkyl- oder

Tetraarylphosphorsalzen. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Salzzubereitung oder Stabilisatorzusammensetzung keine nachteiligen Wirkungen aufweisen und den Einsatzzweck der Salzzubereitung nicht nachteilig beeinflussen.

Ebenfalls im Rahmen der vorliegenden Erfindung einsetzbar sind organische Phosphoniumperchlorate, die an einem Phosphoratom unterschiedliche Typen organischer Substituenten tragen, die wiederum gegebenenfalls unterschiedlich substituiert sein können.

Im Rahmen einer bevorzugten Ausführungsform der vorliegenden Erfindung werden als Phosphoniumperchlorate Tetra-n-butylphosphoniumperchlorat oder Triphenylbenzylphosphoniumperchlorat eingesetzt.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat führen. Dabei können erfindungsgemäß einsetzbare Sulfoniumperchlorate beispielsweise durch entsprechende Umsetzung von Sulfiden wie Alkylmonosulnden, Alkyldisulfiden, Dialkylsulfiden oder Polyalkylsulfiden erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octandisulfid und dergleichen Alkyldisulfiden ab.

Weiterhin eignen sich grundsätzlich zum Einsatz im Rahmen der erfindungsgemäßen Salzzubereitungen Sulfoniumperchlorate, die sich beispielsweise von Tricycloalkylsulfoniumsalzen oder Triarylsulfoniumsalzen ableiten. Geeignete Sulfoniumperchlorate basieren daher beispielsweise auf Tricycloalkyl- oder Triarylsulfoniumsalzen wie Tricyclohexylsulfoniumbromid oder Triphenylsulfoniumbromid und dergleichen Tricycloalkyl- oder Triarylsulfoniumsalzen. Ebenfalls geeignet sind Trialkyl-, Triaryl- oder Tricycloalkylsulfoxoniumsalze wie Trimethylsulfoxoniumperchlorat. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Salzzubereitung oder Stabilisatorzusammensetzung keine nachteiligen Wirkungen aufweisen und den Einsatzzweck der Salzzubereitung einer aus einer solchen Salzzubereitung hergestellten Stabilisatorzusammensetzung nicht nachteilig beeinflussen.

Ebenfalls im Rahmen der vorliegenden Erfindung einsetzbar sind organische Sulfoniumperchlorate, die an einem Schwefelatom unterschiedliche Typen organischer Substituenten tragen, die wiederum gegebenenfalls unterschiedlich substituiert sein können.

Im Rahmen einer bevorzugten Ausführungsform der vorliegenden Erfindung wird als Sulfoniumperchlorat Trimethylsulfoxoniumperchlorat eingesetzt.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre, zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan oder tertiäre Amine wie Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Ebenfalls geeignet sind aliphatische Aminoalkohole mit 2 bis etwa 40, vorzugsweise 2 bis etwa 20 C-Atomen, beispielsweise Ethanolamin, Diethanolamin, Triethanolamin, Tripropanolamin, Tributanolamin, Tripentanolamin, 1-Amino-3,3-dimethyl-pentan-5-ol, 2-Aminohexan-2',2''-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentanmethanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol 2-Phenylglycinol oder 2-Amino-1-phenyl-1,3-propandiol sowie Gemische aus zwei oder mehr solcher Verbindungen eingesetzt werden.

Im Rahmen einer weiteren Ausführungsform der vorliegenden Erfindung werden als Ammoniumperchlorate die Perchlorate heterocyclischer Verbindungen eingesetzt, die über ein cyclisches, Aminogruppen aufweisendes Ringsystem verzügen.

Eine erfindungsgemäße Salzzubereitung kann beispielsweise nur ein Salz einer halogenhaltigen Oxysäure enthalten. Es ist jedoch im Rahmen der vorliegenden Erfindung ebenso möglich und vorgesehen, dass eine erfindungsgemäße Salzzubereitung ein Gemisch aus zwei oder mehr Salzen halogenhaltiger Oxysäuren enthält.

Im Rahmen einer bevorzugten Ausführungsform der vorliegenden Erfindung enthält eine erfindungsgemäße Salzzubereitung beispielsweise Natriumperchlorat.

Der Anteil eines Salzes einer halogenhaltigen Oxysäure oder eines Gemischs aus zwei oder mehr halogenhaltigen Oxysäuren an der erfindungsgemäßen Salzzubereitung beträgt etwa 0,01 bis etwa 99,99 Gew.%, beispielsweise etwa 0,1 bis etwa 90 Gew.% oder etwa 1 bis etwa 85 Gew.-%, beispielsweise etwa 5 bis etwa 80 Gew.% oder etwa 10 bis etwa 70 Gew.-%. Weiterhin geeignete Mengen liegen etwa in einem Bereich von etwa 15 bis etwa 65 Gew.-% oder etwa 20 bis etwa 60 Gew.%, jeweils bezogen auf die gesamte Salzzubereitung.

Als einen zweiten Bestandteil enthält eine erfindungsgemäße Salzzubereitung mindestens ein Lösungsmittel. Unter einem "Lösungsmittel" wird im Rahmen der vorliegenden Erfindung eine Verbindung verstanden, die ein Salz einer halogenhaltigen Oxysäure oder ein Gemisch aus zwei oder mehr Salzen halogenhaltiger Oxysäuren lösen kann.

Eine erfindungsgemäße Salzzubereitung kann beispielsweise nur ein Lösungsmittel enthalten. Es ist jedoch im Rahmen der vorliegenden Erfindung ebenso möglich und vorgesehen, dass eine erfindungsgemäße Salzzubereitung ein Gemisch aus zwei oder mehr Lösungsmitteln enthält.

Der Anteil eines Lösungsmittels oder eines Gemischs aus zwei oder mehr Lösungsmitteln an der erfindungsgemäßen Salzzubereitung beträgt beispielsweise etwa 0,01 bis etwa 99,99 Gew.%, jeweils bezogen auf die gesamte Salzzubereitung, und ergänzt sich im Wesentlichen mit dem Salz einer halogenhaltigen Oxysäure oder dem Gemisch aus zwei oder mehr solcher Salze in der Salzzubereitung zu 100 Gew.-%.

Ein Salz einer halogenhaltigen Oxysäure oder ein Gemisch aus zwei oder mehr Salzen halogenhaltiger Oxysäuren ist im Sinne der vorliegenden Erfindung in einem Lösungsmittel oder einem Gemisch aus zwei oder mehr Lösungsmitteln "löslich", sofern es sich bei 20 °C in einer Menge von mindestens 0,1 Gew.-% oder zu mindestens 0,5 Gew.-% oder zu mindestens 1,0 Gew.-% oder zu mindestens 3,0 Gew.-% oder zu mindestens 5,0 Gew.-% oder zu mindestens 10 Gew.-% oder zu mindestens 15 Gew.-% oder zu mindestens 20 Gew.-%, jeweils bezogen auf das Lösungsmittel oder das Gemisch aus zwei oder mehr Lösungsmitteln, löst. In besonderen Fällen beträgt die Löslichkeit beispielsweise mindestens etwa 40 Gew.-% oder zu mindestens etwa 60 Gew.-% oder mindestens 80 Gew.-% oder liegt sogar noch darüber, beispielsweise bei mindestens etwa 100 Gew.-% oder mindestens etwa 120 Gew.-%, jeweils bezogen auf das Lösungsmittel oder das Gemisch aus zwei oder mehr Lösungsmitteln.

Eine erfindungsgemäße Salzzubereitung kann dabei beispielsweise ausschließlich aus einer Lösung, d.h., einer im Wesentlichen molekulardispers verteilten Mischung aus Salzen halogenhaltiger Oxysäuren und Lösungsmittel bestehen. Es ist jedoch ebenso möglich, dass eine erfindungsgemäße Salzzubereitung im Wesentlichen beliebige Mengen an nicht gelösten Salzbestandteilen, beispielsweise bis zu etwa 90 Gew.-% oder weniger, beispielsweise bis zu etwa 80, 70, 60, 50, 40, 30, 20, 10 oder 5 Gew.-% oder weniger, jeweils bezogen auf die gesamte Salzzubereitung, an ungelösten Salzen einer halogenhaltigen Oxysäure enthält. Im Rahmen einer weiteren Ausführungsform der vorliegenden Erfindung enthält eine erfindungsgemäße Salzzubereitung weniger als etwa 30, insbesondere weniger als etwa 10 oder weniger als etwa 5 Gew.-%, jeweils bezogen auf die gesamte Salzzubereitung, an nicht gelösten Salzen halogenhaltiger Oxysäuren.

Das Mischungsverhältnis zwischen einem Salz einer halogenhaltigen Oxysäure oder einem Gemisch aus zwei oder mehr Salzen halogenhaltiger Oxysäuren und einem Lösungsmittel oder dem Gemisch aus zwei oder mehr Lösungsmitteln in einer Mischung ist in weiten Bereichen unter der Maßgabe variierbar, dass die Salzzubereitung bei einer Temperatur von 80 °C, beispielsweise bei 60 °C oder bei 50 °C oder bei 40 °C oder bei 30 °C oder bei 20 °C oder bei 10 °C oder bei 5 °C oder bei 0 °C fest ist. Beispielsweise beträgt das Mischungsverhältnis zwischen einem Salz einer halogenhaltigen Oxysäure oder einem Gemisch aus zwei oder mehr Salzen halogenhaltiger Oxysäuren und einem Lösungsmittel oder dem Gemisch aus zwei oder mehr Lösungsmitteln in einer Mischung zwischen 1 : 100 und 100 : 1 oder 1 : 80 und 80 : 1 oder 1 : 60 und 60 : 1 oder 1 : 40 und 40 : 1 oder 1 : 20 und 20 : 1 oder 1 : 10 und 10 : 1 oder 5 : 1 und 1 : 5 oder 3 : 1 und 1 : 3, wobei sich die genannten Verhältnisse auf Massenverhältnisse beziehen.

"Fest" beschreibt im Rahmen der vorliegenden Erfindung das Vorliegen eines Stoffes beispielsweise einer erfindungsgemäßen Salzzubereitung, einer Stabilisatorzusammensetzung, eines Salzes einer halogenhaltigen Oxysäure oder eines Lösungsmittels, in einem Zustand, in welchem seine Form unabhängig von dem Gefäß ist, in welchem er sich befindet. Ein fester Stoff im Sinne der vorliegenden Erfindung weist beispielsweise eine Viskosität von $10^6$ mPa s oder mehr als $10^6$ mPa s oder mehr als $10^7$ mPa s oder mehr als $10^8$ mPa s oder mehr als $10^9$ mPa s oder mehr als $10^{10}$ mPa s oder mehr als $10^{11}$ mPa s auf. Ein fester Stoff im Sinne der vorliegenden Erfindung kann beispielsweise schnittfest sein.

"Flüssig" beschreibt im Rahmen der vorliegenden Erfindung demgegenüber das Vorliegen eines Stoffes, beispielsweise einer erfindungsgemäßen Salzzubereitung, einer Stabilisatorzusammensetzung, eines organischen Oniumsalzes einer halogenhaltigen Oxysäure oder eines Lösungsmittels, in einem Zustand, in welchem seine Form abhängig von dem Gefäß ist, in welchem er sich befindet. Ein flüssiger Stoff im Sinne der vorliegenden Erfindung weist beispielsweise eine Viskosität von mindestens 0,2 mPa s und von weniger als $10^6$ mPa s oder von weniger als $10^3$ mPa s oder von weniger als 10 mPa s oder von weniger als 1 mPa s oder von weniger als 0,5 mPa s auf.

Im Rahmen einer weiteren Ausführungsform der vorliegenden Erfindung wird das Mischungsverhältnis zwischen einem Salz einer halogenhaltigen Oxysäure oder einem Gemisch aus zwei oder mehr Salzen halogenhaltiger Oxysäuren und einem Lösungsmittel oder dem Gemisch aus zwei oder mehr Lösungsmitteln in einer Mischung so eingestellt, dass sich das Salz einer halogenhaltigen Oxysäure oder das Gemisch aus zwei oder mehr Salzen halogenhaltiger Oxysäuren in dem Lösungsmittel oder in dem Gemisch aus zwei oder mehr Lösungsmitteln im Wesentlichen vollständig löst und bei 80 °C oder bei 60°C oder bei 50 °C oder bei 40 °C oder bei 30 °C oder bei 20 °C oder bei 10 °C oder bei 5 °C oder bei 0 °C einen Feststoff bildet.

Ein Salz einer halogenhaltigen Oxysäure oder ein Gemisch aus zwei oder mehr Salzen halogenhaltiger Oxysäuren und ein Lösungsmittel oder ein Gemisch aus zwei oder mehr Lösungsmitteln können in einer erfindungsgemäßen Salzzubereitung im Wesentlichen in beliebiger Weise vorliegen. Ein Lösungsmittel oder ein Gemisch aus zwei oder mehr Lösungsmitteln kann beispielsweise ein Salz einer halogenhaltigen Oxysäure oder ein Gemisch aus zwei oder mehr Salzen halogenhaltiger Oxysäuren in einfacher Weise lösen. Ein Lösungsmittel oder ein Gemisch aus zwei oder mehr Lösungsmitteln kann ein Salz einer halogenhaltigen Oxysäure oder ein Gemisch aus zwei oder mehr Salzen halogenhaltiger Oxysäuren aber beispielsweise auch komplexieren oder koordinativ umgeben.

Ein Salz einer halogenhaltigen Oxysäure oder ein Gemisch aus zwei oder mehr Salzen halogenhaltiger Oxysäuren kann beispielsweise durch ein Lösungsmittel oder ein Gemisch aus zwei oder mehr Lösungsmitteln in einfacher Form gelöst sein. Hierbei können das Salz einer halogenhaltigen Oxysäure oder das Gemisch aus zwei oder mehr Salzen halogenhaltiger Oxysäuren und das Lösungsmittel oder das Gemisch aus zwei oder mehr Lösungsmitteln im Wesentlichen in miteinander molekulardispers vermischter Form vorliegen. Die Wechselwirkungen zwischen einem Salz einer halogenhaltigen Oxysäure oder einem Gemisch aus zwei oder mehr Salzen halogenhaltiger Oxysäuren und einem Lösungsmittel oder einem Gemisch aus zwei oder mehr Lösungsmitteln können in einem solchen Fall relativ schwach sein, sind jedoch mindestens derart ausgebildet, dass eine im wesentlichen molekulardisperse Lösung bei der gewünschten Temperatur vorliegt bzw. entsteht.

Eine Salzzubereitung gemäß vorliegender Erfindung kann weiterhin von Lösungsmittelmolekülen komplexierte Salze halogenhaltiger Oxysäuren enthalten. Eine Salzzubereitung gemäß vorliegender Erfindung umfasst somit beispielsweise Mischungen, in denen Moleküle erfindungsgemäßer Lösungsmittel die Kationen oder die Anionen oder die Kationen und die Anionen der Salze halogenhaltiger Oxysäuren komplexieren.

Im Rahmen einer weiteren Ausführungsform der Erfindung betrifft der vorliegende Text daher auch eine Salzzubereitung, welche mindestens ein durch Lösungsmittelmoleküle komplexiertes Salz einer halogenhaltigen Oxysäure enthält, wobei Lösungsmittelmoleküle mindestens ein Kation oder mindestens ein Anion oder mindestens ein Kation und mindestens ein Anion eines oder mehrerer Salze halogenhaltiger Oxysäuren komplexieren.

Im Rahmen der vorliegenden Erfindung können derartige Ionen als Komplexkationen oder Komplexanionen bezeichnet sein.

Eine Salzzubereitung nach vorliegender Erfindung umfasst beispielsweise feste Mischungen enthaltend Komplexe aus einem Salz einer halogenhaltigen Oxysäure oder einem Gemisch aus zwei oder mehr Salzen halogenhaltiger Oxysäuren und einem Lösungsmittel oder dem Gemisch aus zwei oder mehr Lösungsmitteln.

Eine Salzzubereitung entsprechend vorliegender Erfindung umfasst beispielsweise feste Mischungen enthaltend mindestens einen Komplex aus einem Salz einer halogenhaltigen Oxysäure und einem Lösungsmittel oder mindestens einen Komplex aus zwei oder mehr Salzen halogenhaltiger Oxysäuren und einem Lösungsmittel oder mindestens einen Komplex aus einem Salz einer halogenhaltigen Oxysäure und zwei oder mehr Lösungsmitteln oder mindestens einen Komplex aus zwei oder mehr Salzen halogenhaltiger Oxysäuren und zwei oder mehr Lösungsmitteln.

Erfindungsgemäße Salzzubereitungen können derartige Komplexe dabei in amorpher oder kristalliner Form oder in amorpher und kristalliner Form enthalten.

Eine Salzzubereitung gemäß vorliegender Erfindung kann darüber hinaus von Lösungsmittelmolekülen koordinativ umgebene Salze halogenhaltiger Oxysäuren enthalten. Eine Salzzubereitung nach vorliegender Erfindung umfasst beispielsweise feste Mischungen, bei der die Lösungsmittelmoleküle erfindungsgemäß geeigneter Lösungsmittel koordinativ an Ionen eines Salzes einer halogenhaltigen Oxysäure oder eines Gemisches aus zwei oder mehr Salzen halogenhaltiger Oxysäuren gebunden sind oder beispielsweise über Wasserstoffbrückenbindungen an solche Ionen gebunden vorliegen. Koordinativ gebundene Lösungsmittelmoleküle gemäß vorliegender Erfindung sind im Vergleich zu komplex gebundenen Lösungsmittelmolekülen gemäß vorliegender Erfindung in der Regel nur relativ schwach an die erfindungsgemäßen Salze halogenhaltiger Oxysäuren gebunden. Koordinativ gebundene Lösungsmittelmoleküle können beispielsweise häufig durch thermische Behandlung aus einer festen Mischung gemäß vorliegender Erfindung entfernt werden.

Gemäß vorliegender Erfindung sind als Lösungsmittel im Rahmen der Mischung sowohl anorganische als auch organische Lösungsmittel sowie deren Gemische geeignet. Im Rahmen einer bevorzugten Ausführungsform werden organische Lösungsmittel verwendet.

Die vorliegende Erfindung betrifft daher auch eine Salzzubereitung, dadurch gekennzeichnet, dass die Salzzubereitung mindestens ein organisches Lösungsmittel enthält.

Erfindungsgemäß geeignete Lösungsmittel sind insbesondere polare organische Lösungsmittel. Als polare organische Lösungsmittel sind erfindungsgemäß alle Lösungsmittel geeignet, deren Moleküle ein elektrisches Dipolmoment aufweisen. Insbesondere geeignet sind polare organische Lösungsmittel mit elektronegativen Heteroatomen, beispielsweise O, S, N, P, F, Cl, Br.

Eine weitere Ausführungsform der vorliegenden Erfindung betrifft eine Salzzubereitung, dadurch gekennzeichnet, dass die Salzzubereitung mindestens ein polares organisches Lösungsmittel enthält.

Beispielsweise als polare organische Lösungsmittel einsetzbar sind Polyole. Im Rahmen der vorliegenden Erfindung bezeichnet der Begriff "Polyole" organische Verbindungen, die zwei oder mehr OH-Gruppen pro Molekül aufweisen. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxyethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-$\alpha$-D-Glycopyranosyl-D-mannitdihydrat.

Im Rahmen einer weiteren Ausführungsform der vorliegenden Erfindung umfasst daher eine Salzzubereitung mindestens ein Polyol als Lösungsmittel.

Ebenfalls als polares organisches Lösungsmittel geeignet sind aliphatische Aminoalkohole, beispielsweise Aminomonoalkohole oder Aminopolyole mit 2 bis etwa 40, vorzugsweise 2 bis etwa 20 C-Atomen, beispielsweise Ethanolamin, Diethanolamin, Triethanolamin, Triisopropanolamin, Tri-n-propanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Das Mischen eines Salzes einer halogenhaltigen Oxysäure oder eines Gemisches aus zwei oder mehr Salzen halogenhaltiger Oxysäuren und eines Lösungsmittels oder eines Gemisches aus zwei oder mehr Lösungsmitteln erfolgt erfindungsgemäß in der Weise, dass das Lösungsmittel während des Mischens in flüssiger Form eingesetzt wird.

Im Rahmen einer bevorzugten Ausführungsform der vorliegenden Erfindung wird als Bestandteil der erfindungsgemäßen Salzzubereitung mindestens ein Lösungsmittel eingesetzt, das auf die Stabilisierung halogenhaltiger Polymerer einen vorteilhaften Einfluss ausübt. Die Herstellung einer festen Salzzubereitung gemäß der vorliegenden Erfindung gelingt grundsätzlich mit jeder dem Fachmann bekannten Methode zur Vermischung unterschiedlicher fester und flüssiger Substanzen, beispielsweise durch einfaches Vermischen des Salzes einer halogenhaltigen Oxysäure oder des Gemisches aus zwei oder mehr Salzen halogenhaltiger Oxysäuren und des Lösungsmittels oder des Gemisches aus zwei oder mehr Lösungsmitteln. Beispielsweise kann das Lösungsmittel oder das Gemisch aus zwei oder mehr Lösungsmitteln vorgelegt und das Salz einer halogenhaltigen Oxysäure oder das Gemisch aus zwei oder mehr Salzen halogenhaltiger Oxysäuren zugegeben werden. Es ist erfindungsgemäß jedoch ebenso vorgesehen, dass das Salz einer halogenhaltigen Oxysäure oder das Gemisch aus zwei oder mehr Salzen halogenhaltiger Oxysäuren vorgelegt und anschließend das Lösungsmittel oder das Gemisch aus zwei oder mehr Lösungsmitteln zugegeben wird. Bei der Auswahl einer Methode zur Vermischung der Komponenten im Rahmen der Herstellung einer erfindungsgemäßen Salzzubereitung ist gegebenenfalls eine starke Wärmeentwicklung während des Vermischens zu berücksichtigen.

Gegenstand der vorliegenden Erfindung ist daher auch eine Salzzubereitung, herstellbar durch das Vermischen eines Salzes einer halogenhaltigen Oxysäure oder eines Gemisches aus zwei oder mehr Salzen halogenhaltiger Oxysäuren mit einem Lösungsmittel oder einem Gemisch aus zwei oder mehr Lösungsmitteln, wobei mindestens 0,1 Gew.-% des Salzes einer halogenhaltigen Oxysäure oder des Gemisches aus zwei oder mehr Salzen halogenhaltiger Oxysäuren, bezogen auf das Lösungsmittel oder das Gemisch aus zwei oder mehr Lösungsmitteln, in diesem gelöst werden und die Salzzubereitung bei 5 °C fest wird.

Die vorliegende Erfindung betrifft somit auch Verfahren zur Herstellung einer bei 5 °C festen Salzzubereitung, dadurch gekennzeichnet, dass durch das Vermischen eines Salzes einer halogenhaltigen Oxysäure oder eines Gemisches aus zwei oder mehr Salzen halogenhaltiger Oxysäuren mit einem Lösungsmittel oder einem Gemisch aus zwei oder mehr Lösungsmitteln mindestens 0,1 Gew.-% des Salzes einer halogenhaltigen Oxysäure oder des Gemisches aus zwei oder mehr Salzen halogenhaltiger Oxysäuren, bezogen auf das Lösungsmittel oder das Gemisch aus zwei oder mehr Lösungsmitteln, in diesem gelöst werden.

Eine weitere Ausführungsform der vorliegenden Erfindung betrifft ein Verfahren, bei dem das Salz einer halogenhaltigen Oxysäure oder das Gemisch aus zwei oder mehr Salzen halogenhaltiger Oxysäuren durch Vermischen mit einem flüssigen Lösungsmittel oder einem Gemisch aus zwei oder mehr flüssigen Lösungsmitteln zu mindestens 0,1 Gew.-%, bezogen auf das Lösungsmittel oder das Gemisch aus zwei oder mehr Lösungsmitteln, in diesem gelöst wird, wodurch die Salzzubereitung fest wird.

Zur Herstellung von erfindungsgemäßen Salzzubereitungen eignen sich nicht nur Lösungsmittel, die bei Raumtemperatur flüssig sind. Es ist erfindungsgemäß ebenso vorgesehen, Lösungsmittel zu verwenden, die beispielsweise bei 80 °C oder bei 60 °C oder bei 50 °C oder bei 40 °C oder bei 30 °C oder zumindest bei Raumtemperatur fest sind.

Zur Bereitstellung eines bei Raumtemperatur festen Lösungsmittels oder eines Gemisches aus zwei oder mehr bei Raumtemperatur festen Lösungsmitteln in flüssiger Form kann dieses mindestens während der Zeit des Vermischens auf eine zur Herstellung der erfindungsgemäßen Salzzubereitung geeignete Temperatur erwärmt oder in einem geeigneten Temperaturbereich gehalten werden. Beispielsweise kann das Lösungsmittel oder das Gemisch aus zwei oder mehr Lösungsmitteln vorgelegt und erwärmt und das Salz einer halogenhaltigen Oxysäure oder das Gemisch aus zwei oder mehr Salzen halogenhaltiger Oxysäuren anschließend zugegeben werden. Es ist erfindungsgemäß jedoch ebenso vorgesehen, das Lösungsmittel oder das Gemisch aus zwei oder mehr Lösungsmitteln und das Salz einer halogenhaltigen Oxysäure oder das Gemisch aus zwei oder mehr Salzen halogenhaltiger Oxysäuren vorzulegen und beide auf eine zur Herstellung einer erfindungsgemäßen Salzzubereitung geeignete Temperatur zu erwärmen. Unter einer geeigneten Temperatur wird erfindungsgemäß eine Temperatur verstanden, bei der das Vermischen eines Salzes einer halogenhaltigen Oxysäure oder eines Gemisches aus zwei oder mehr Salzen halogenhaltiger Oxysäuren und dem Lösungsmittel oder dem Gemisch aus zwei oder mehr Lösungsmitteln die Herstellung einer erfindungsgemäßen Salzzubereitung gewährleistet.

Das Vermischen eines Salzes einer halogenhaltigen Oxysäure oder eines Gemisches aus zwei oder mehr Salzen halogenhaltiger Oxysäuren mit einem Lösungsmittel oder einem Gemisch aus zwei oder mehr Lösungsmitteln kann daher bei verschiedenen Temperaturen unter der Maßgabe erfolgen, dass das Lösungsmittel oder das Gemisch aus zwei oder mehr Lösungsmitteln in flüssiger Form vorliegt.

Das Vermischen kann daher beispielsweise bei Raumtemperatur erfolgen, es ist jedoch erfindungsgemäß ebenso vorgesehen, dass das Vermischen auch bei Temperaturen unterhalb oder oberhalb von Raumtemperatur erfolgt. Grundsätzlich sollte die Temperatur beim Vermischen so gewählt werden, dass der Lösungsvorgang beim Vermischen möglichst schnell erfolgt, jedoch keine oder zumindest keine wesentliche Reaktion zwischen dem Salz einer halogenhaltigen Oxysäure oder dem Gemisch aus zwei oder mehr Salzen halogenhaltiger Oxysäuren mit dem Lösungsmittel oder dem Gemisch aus zwei oder mehr Lösungsmitteln erfolgen kann. So kann das Vermischen grundsätzlich in einem Temperaturbereich von -50 °C bis 200 °C erfolgen. Im Rahmen weiterer Ausführungsformen der vorliegenden Erfindung kann das Vermischen in einem Temperaturbereich von -30 °C bis 180 °C oder von -10 °C bis 160 °C oder von 10 °C bis 140 °C oder von 20 °C bis 130 °C oder von 20 °C bis 110 °C oder von 20 °C bis 90 °C oder von 20 °C bis 70 °C oder von 20 °C bis 50 °C erfolgen.

Gegenstand der vorliegenden Erfindung ist daher auch ein Verfahren zur Herstellung einer Salzzubereitung, dadurch gekennzeichnet, dass

a) ein Lösungsmittel oder ein Gemisch aus zwei oder mehr Lösungsmitteln durch Erwärmen geschmolzen,
b) ein Salz einer halogenhaltigen Oxysäure oder ein Gemisch aus zwei oder mehr Salzen halogenhaltiger Oxysäuren durch Vermischen mit dem Lösungsmittel oder dem Gemisch aus zwei oder mehr Lösungsmitteln zu mindestens 0,1 Gew.%, bezogen auf das Lösungsmittel oder das Gemisch aus zwei oder mehr Lösungsmitteln, in diesem gelöst
c) und die gebildete Salzzubereitung abgekühlt wird,

wodurch die Salzzubereitung fest wird.

Eine Salzzubereitung gemäß vorliegender Erfindung kann beispielsweise als eine Stabilisatorzusammensetzung oder als Bestandteil einer Stabilisatorzusammensetzung zur Stabilisierung halogenhaltiger Polymerer eingesetzt werden.

Unter einer "Stabilisatorzusammensetzung" wird im Rahmen der vorliegenden Erfindung eine Stabilisatorzusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich, eine erfindungsgemäße Stabilisatorzusammensetzung dem zu stabilisierenden, halogenhaltigen Polymeren während der Verarbeitung beizumischen.

Eine Salzzubereitung gemäß vorliegender Erfindung kann bereits alleine, d.h. ohne die Zugabe weiterer Zusatzstoffe als eine Stabilisatorzusammensetzung zur Stabilisierung halogenhaltiger Polymerer eingesetzt werden. Häufig ist es jedoch vorteilhaft, eine erfindungsgemäße Salzzubereitung mit weiteren Zusatzstoffen zu einer Stabilisatorzusammensetzung zu vermischen.

Als Zusatzstoffe geeignet sind beispielsweise auch Aminoalkohole, sofern sie nicht bereits als Lösungsmittel in der erfindungsgemäßen Salzzubereitung vorliegen. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im Wesentlichen in fester Form vorliegt.

Geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan, Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2''-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1,-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel I

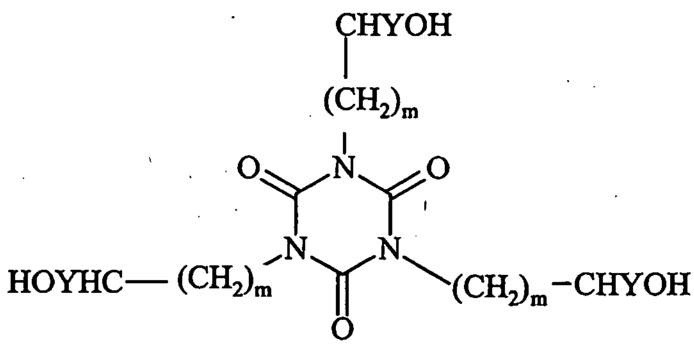

(I),

worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxyethyl) isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Ebenfalls als Zusatzstoffe im Rahmen der vorliegenden Erfindung geeignet sind Verbindungen mit einem Strukturelement der allgemeinen Formel II

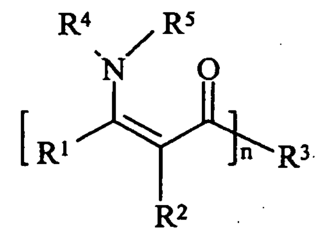

(II),

worin n für eine Zahl von 1 bis 100.000, die Reste $R^4$, $R^5$, $R^1$ und $R^2$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen

gegebenenfalls substituierten Aralkylrest mit 7 bis 44 C-Atomen stehen oder der Rest $R^1$ für einen gegebenenfalls substituierten Acylrest mit 2 bis 44 C-Atomen steht oder die Reste $R^1$ und $R^2$ zu einem aromatischen oder heterocyclischen System verbunden sind und worin der Rest $R^3$ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, $NR^4$ oder $CH_2C(O)$ mit dem in Klammern stehenden Strukturelement verbunden ist, steht oder der Rest $R^3$ mit dem Rest $R^1$ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel I, enthalten.

Im Rahmen einer bevorzugten Ausführungsform der vorliegenden Erfindung wird als Verbindung der allgemeinen Formel I eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest $R^3$ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxyethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel II eine Verbindung eingesetzt, in der $R^1$ für einen linearen Alkylrest mit 1 bis 4 C-Atomen, $R^2$ für Wasserstoff und $R^3$ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel II umfassen beispielsweise β-Aminocrotonsäurestearylester, 1,4-Butandiol-di(β-aminocrotonsäure)ester, Thio-diethanol-β-aminocrotonsäureester, Trimethylolpropan-tri-β-aminocrotonsäureester, Pentaetythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen der allgemeinen Formel II geeignet sind Aminouracilverbindungen der allgemeinen Formel III

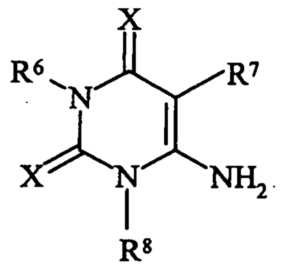

(III),

worin die Reste $R^6$ und $R^7$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest $R^6$ für einen gegebenenfalls substituierten Acylrest mit 2 bis 44 C-Atomen steht oder die Reste $R^6$ und $R^7$ zu einem aromatischen oder heterocyclischen System verbunden sind und der Rest $R^8$ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen und X für S oder O steht.

Die Verbindung gemäß Formel III fällt damit unter die Verbindungen gemäß Formel I, wobei n in der allgemeinen Formel I für 1 und die Reste $R^1$ und $R^3$ gemäß der allgemeinen Formel I zu dem Strukturelement der allgemeinen Formel IV

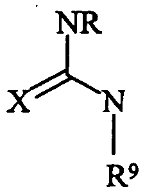

(IV),

verbunden sind, worin X für S oder O steht. $R^1$ steht im Falle einer Verbindung der allgemeinen Formel IV also für N-$R^9$, während $R^3$ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel IV eingesetzt, bei denen $R^9$ für Wasserstoff steht.

Im Rahmen einer weiteren bevorzugten Ausführungsform der vorliegenden Erfindung werden in den erfindungsgemäßen Stabilisatorzusammensetzungen Verbindungen der allgemeinen Formel III eingesetzt, bei denen $R^6$ und $R^8$ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel III eingesetzt, worin $R^6$ und $R^8$ für Wasserstoff, Methyl, Ethyl, n-Propyl, Isopropyl, n-, i-, sec- oder t-Butyl stehen.

Ebenfalls als Verbindungen der allgemeinen Formel I geeignet sind beispielsweise Verbindungen, in denen die Reste $R^1$ und $R^2$ zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung der allgemeinen Formel I oder ein Gemisch aus zwei oder mehr Verbindungen der allgemeinen Formel I, beispielsweise eine Verbindung der allgemeinen Formel III, in einer Menge von etwa 0,1 bis etwa 99,5 Gew.-%, insbesondere etwa 5 bis etwa 50 Gew.-% oder etwa 5 bis etwa 25 Gew.-%.

Als weitere Zusatzstoffe eignen sich im Rahmen der vorliegenden Erfindung beispielsweise Verbindungen, die mindestens ein mercaptofunktionelles, $sp^2$-hybridisiertes C-Atom aufweisen. Unter Verbindungen, die mindestens ein

mercaptofunktionelles, $sp^2$-hybridisiertes C-Atom aufweisen, werden im Rahmen der vorliegenden Erfindung grundsätzlich alle Verbindungen verstanden, die ein Strukturelement $Z^1$=$CZ^2$-SH oder ein Strukturelement ($Z^1$H, $Z^2$)C=S aufweisen, wobei beide Strukturelemente tautomere Formen einer einzigen Verbindung sein können. $Z^1$ und $Z^2$ bezeichnen substituierte oder unsubstituierte organische Reste, die in Kombination mit den mercaptofunktionellen, $sp^2$-hybridisierten C-Atomen erfindungsgemäße Verbindungen realisieren, die mindestens ein mercaptofunktionelles, $sp^2$-hybridisiertes C-Atom aufweisen. Dabei können $Z^1$ und $Z^2$ gegebenenfalls miteinander verbunden und Teil eines Ringsystems sein. Das $sp^2$-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Geeignete Verbindungen mit mindestens einem mercaptofunktionellen, $sp^2$-hybridisierten C-Atom werden beispielsweise in der deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, $sp^2$-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei oder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatischen Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, BisTrimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl) phthalimid oder 2,3-Epoxypropyl-4-methoxyphenylether.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR"-C(O)R"', wie sie beispielsweise auf S. 5 der EP- 1 046 668 beschrieben sind, auf die insbesondere im Hinblick auf die Reste R', R" und R"' ausdrücklich Bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbehzoylmethan, Palmitoylbenzoylmethan, Stearoylbenzoylmethan, Isooctylbenzoylmethan, 5-Hydroxycapronylbenzoylinethan, Tribenzoylinethan, Bis(4-methylbenzoyl)methan, Benzoylp-chlorbenzoylmethan, Bis(2-hydroxybenzoyl)methan, 4-Methoxybenzoylbenzoylmethan, Bis (4-methoxybenzoyl)methan, Benzoylformylmethan, Benzoylacetylphenylinethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmeihan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, -hexyl- oder -octylester oder mehrkernige β-Ketoester wie sie in der EP-A 433 230 beschrieben sind, auf die ausdrücklich Bezug genommen wird, oder Dehydracetsäure sowie deren Zink-, Magnesium- oder Alkalisalze oder die Alkali-, Erdalkali-, oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisätorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxyethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich Bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel V

$$M^{2+}_{(2+x)}Al^{3+}_{(1+y)}(OH)_{(6+z)}A^{j-}_{a}[B_r]^{rl}_{b} * m\ H_2O \qquad (V),$$

worin M für Calcium, Magnesium oder Zink oder Gemische aus zwei oder mehr davon, A für ein j-wertiges anorganisches oder organisches Säureanion, j für 1, 2 oder 3, B für ein von A verschiedenes anorganisches oder organisches Säureanion steht, r für eine ganze Zahl ≥ 1 steht und, sofern r > 1 ist, den Polymerisationsgrad des Säureanions angibt und 1 für 1, 2, 3 oder 4 steht und die Wertigkeit des Säureanions angibt, wobei für r = 11 für 2, 3 oder 4 steht und für r > 11 die Wertigkeit der einzelnen Monomereinheiten des Polyanions angibt und für 1, 2, 3 oder 4 steht und rl die Gesamtwertigkeit des Polyanions angibt und die folgenden Regeln für die Parameter x, y, a, b, r, z, und j gelten:

$$0 \leq x < 0{,}6,$$

$$0 \leq y < 0{,}4,$$

wobei entweder x = 0 oder y = 0,

$$0 < a < 0{,}8/r$$

und

$$z = 1 + 2x + 3y - ja - r/b.$$

Im Rahmen einer bevorzugten Ausführungsform der vorliegenden Erfindung werden als Zusatzstoffe Verbindungen der allgemeinen Formel V eingesetzt, worin M für Calcium steht, das gegebenenfalls im Gemisch mit Magnesium oder Zink oder Magnesium und Zink vorliegen kann.

In der allgemeinen Formel V steht A für ein r-wertiges anorganisches oder organisches Säureanion, wobei r für 1, 2 oder 3 steht. Beispiele für im Rahmen von erfindungsgemäß einsetzbaren Hydrocalumiten vorliegende Säureanionen sind Halogenidionen, $SO_3^{2-}$, $SO_4^{2-}$, $5_2O_3^{2-}$, $S_2O_4^{2-}$, $HPO_3^{2-}$, $PO_4^{3-}$, $CO_3^{2-}$, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise $F^-$, $Cl^-$ oder $Br^-$, vorzugsweise für $Cl^-$.

In der allgemeinen Formel V steht B für ein Säureanion, das von A verschieden ist. Für den Fall, dass in der allgemeinen Formel V r für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel V vorliegende Säureanionen B sind beispielsweise $O^{2-}$, $SO_3^{2-}$, $SO_4^{2-}$, $S_2O3^{2-}$, $S_2O_4^-$, $HPO_3^{2-}$, $PO_4^{3-}$, $CO_3^{2-}$, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel V für ein Borat oder ein Anion einer gegebenenfalls funktionalisierte Di-, Tri- der Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall dass r in der allgemeinen Formel V für eine Zahl von mehr als 1 steht, steht der Term $[B_r]^{rl-}$ für ein anorganisches oder organisches Polyanion mit dem Polymerisationsgrad r und der Wertigkeit 1 der einzelnen Monomereinheiten des Polyanions mit der Gesamtwertigkeit rl, wobei 1 gleich oder größer als 1 ist. Beispiele für geeignete Polyanionen $[B_r]^{rl-}$ sind Polyacrylate, Polycarboxylate, Polyborate, Polysilikate, Polyphosphate oder Polyphosphonate.

In allen oben genannten Fällen können die Säureanionen A und B in einem beliebigen Verhältnis a/b in den Verbindungen der allgemeinen Formel V enthalten sein.

Bei den Verbindungen der allgemeinen Formel V handelt es sich nicht um schichtartig aufgebaute Verbindungen vom Hydrotalcit- bzw. Hydrocalumittyp, sondern um eine physikalische Mischung von $M^{2+}$/Aluminiumoxidhydraten mit Salzen zweiwertiger Metalle. Röntgendiffraktogramme der in der erfindungsgemäßen Stabilisatorzusammensetzung eingesetzten Verbindungen der allgemeinen Formel V zeigen eindeutig, dass es sich nicht um diskrete kristalline Verbindungen eines bekannten Typs sondern um röntgenamorphe Mischungen handelt.

Zur Herstellung der Verbindungen gemäß der allgemeinen Formel V können, bekannten Verfahren folgend, Lösungen bzw. Suspensionen oxidischer Formen der gewünschten Kationen (z.B. $NaAlO_2$, $Ca(OH)_2$, $Zn(OH)_2$, $Al(OH)_3$) mit Lösungen oder Suspension von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gew.-%.

Verbindungen der allgemeinen Formel V können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Im Rahmen einer weiteren Ausführungsform der vorliegenden Erfindung enthält eine erfindungsgemäße Stabilisatorzusammensetzung mindestens ein basisches Calciumsalz. Als basische Calciumsalze geeignet sind beispielsweise Calciumoxid, Calciumcarbonat oder, sofern es nicht bereits zwingender Bestandteil der erfindungsgemäßen Stabilisatorzusammensetzungen ist, Calciumhydroxid. Die basischen Calciumsalze können gegebenenfalls oberflächenmodifiziert sein.

Ebenfalls als Zusatzstoffe zu den erfindungsgemäßen Stabilisatoizusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen, die als Zusatzstoffe geeigneten Metalloxide, Metallhydroxide oder Metallseifen vorzugsweise ein zweiwertiges Kation auf, besonders geeignet sind die Kationen von Calcium oder Zink oder Blei oder Gemische aus zwei oder mehr davon, im Rahmen einer bevorzugten Ausführungsform der vorliegenden Erfindung sind die erfindungsgemäßen Stabilisatorzusammensetzungen jedoch frei von Zink.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triesfern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden als Zusatzstoffe Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-,

Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Eine erfindungsgemäße Stabilisatorzusammensetzung kann die beschriebenen blockierten Mercaptane in einer Menge von bis zu etwa 30 Gew.-%, insbesondere bis zu etwa 10 Gew.-%, enthalten.

Eine erfindungsgemäße Stabilisatorzusammensetzung kann weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben: Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-isotridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Diisooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat, Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der. Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.-%.

Ebenfalls als Bestandteil der erfindungsgemäßen Stabilisatorzusammensetzungen geeignet sind Pigmente. Beispiele für geeignete anorganische Pigmente sind Titandioxid, Ruß, $Fe_2O_3$, $Sb_2O_3$, (Ba, Sb)$O_2$, $Cr_2O_3$, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Bevorzugt werden im Rahmen der vorliegenden Erfindung als Antioxidantien die Produkte der Irganox®-Reihe (Hersteller: Ciba Specialty Chemicals), beispielsweise Irganox® 1010 oder 1076 oder Produkte der Lowinox-Reihe der Fa. Great Lakes eingesetzt.

Geeignete UV-Absorber und Lichtschutzmittel werden in der EP-A 1 046 668 auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Gegenstand der vorliegenden Erfindung ist daher auch eine Stabilisatorzusammensetzung mindestens enthaltend eine Salzzubereitung entsprechend vorliegender Erfindung oder eine gemäß einem erfindungsgemäßen Verfahren hergestellte Salzzubereitung und mindestens einen weiteren Zusatzstoff.

Neben der erfindungsgemäßen Stabilisatorzusammensetzung selbst ist auch das Verfahren zu deren Herstellung Gegenstand der vorliegenden Erfindung.

Die vorliegende Erfindung betrifft daher auch ein Verfahren zur Herstellung einer Stabilisatorzusammensetzung, dadurch gekennzeichnet, dass eine erfindungsgemäße Salzzubereitung oder eine erfindungsgemäß hergestellte Salzzubereitung und mindestens ein weiterer Zusatzstoff vermischt werden.

Die erfindungsgemäßen Stabilisatorzusammensetzungen eignen sich beispielsweise zur Stabilisierung halogenhaltiger Polymerer.

Beispiele für derartige halogenhaltige Polymere sind Polymere des Vinylchlorids Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der $\alpha$-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung ist daher eine Polymerzusammensetzung, mindestens enthaltend ein halogenhaltiges Polymeres und eine erfindungsgemäße Salzzubereitung oder eine erfindungsgemäß hergestellte Salzzubereitung oder eine erfindungsgemäße Stabilisatorzusammensetzung oder eine erfindungsgemäß hergestellte Stabilisatorzusammensetzung..

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockene Mischung, als Lösung oder Schmelze zuzusetzen.

Gegenstand der vorliegenden Erfindung ist daher auch ein Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer erfindungsgemäßen Salzzubereitung oder einer erfindungsgemäß hergestellten Salzzubereitung oder einer erfindungsgemäßen Stabilisatorzusammensetzung oder einer erfindungsgemäß hergestellten Stabilisatorzusammensetzung vermischt wird.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von hart- oder weich-PVC, insbesondere zur Herstellung von PVC-U.

Eine erfindungsgemäße Polymerzusammensetzung kann zu Formkörpern verarbeitet werden. Gegenstand der vorliegenden Erfindung sind somit auch Formkörper, mindestens enthaltend eine erfindungsgemäße Salzzubereitung oder eine erfindungsgemäß hergestellte Salzzubereitung oder eine erfindungsgemäße Stabilisatorzusammensetzung oder eine erfindungsgemäß hergestellte Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die Erfindung wird nachfolgend durch Beispiele näher erläutert.

**Beispiel I**

**1. Herstellung der Vergleichsbeispiele (VB):**

Für die Vergleichsbeispiele wurden physikalische Mischungen entsprechend Tabelle 1 angefertigt. Die Einsatzmengen der (Erd)alkalimetall-Perchlorate entsprechen identischen Perchloratgehalten der fertigen Mischungen.

Tabelle 1: Zusammensetzung der Vergleichsbeispiele

| | VB 1 | VB 2 | VB 3 | VB 4 | VEB 5 |
|---|---|---|---|---|---|
| Trimethylolpropan | | 10 g | 10 g | 10 g | |
| BS ASM 711[1] | 10 g | | | | |
| Cyanguanidin | | 5 g | | | |
| N,N'-Dimethylharnstoff | | | 5 g | 5 g | |
| Lithiumperchlorat | | 8,7 g | 8,7 g | | |
| Natriumperchlorat [2] | | | | | 10 g |
| Calciumperchlorat[3] | | | | 12,7 g | |
| Triethanolamin | | | | | 10 g |

[1] Handelsname Baerlocher GmbH, Perchloratgehalt 10 %
[2] Monohydrat
[3] Tetrahydrat

**2. Herstellung der erfindungsgemäßen Beispiele (EB):**

Die erfindungsgemäßen Beispiele wurden wie folgt hergestellt. Mischungen entsprechend Tabelle 2 wurden bis zum Schmelzpunkt der organischen Komponente(n) erhitzt und bis zur Bildung einer homogenen flüssigen Phase bei dieser Temperatur gerührt. Anschließend wurde langsam auf Raumtemperatur abgekühlt. Die so erhaltenen festen Stabilisatorzubereitungen wurden vor der Austestung vermahlen. Die Einsatzmengen der (Erd)alkalimetall-Perchlorate entsprechen identischen Perchloratgehalten der fertigen Mischungen.

Tabelle 2: Zusammensetzung der erfindungsgemäßen Beispiele

| | EB 1 | EB 2 | EB 3 | EB 4 | EB 5 | EB 6 | EB 7 |
|---|---|---|---|---|---|---|---|
| Trimethylolpropan | 10,0 g | 10,0 g | 10,0 g | 10,0 g | 10,0 g | 10,0 g | 10,0 g |
| PEG 20.000[1] | | | | | | | |
| Lithiumperchlorat | | 8,70 g | 8,70 g | 8,70 g | | | |
| Natriumperchlorat[2] | | | | | | | |
| Calciumperchlorat[3] | 12,7 g | | | | 12,7 g | 12,7 g | 12,7 g |
| Cyanguanidin | | 5,00 g | | | 5,00 g | | |
| N,N'-Dimethylharnstoff | | | 5,00 g | | | | |
| Acetamid | | | | 5,00 g | | 5,00 g | |
| 2-Pyrrolidon | | | | | | | 5,00 g |
| Triethanolamin | | | | | | | |
| Epoxid[4] | 5,00 g | | | | | | |

| | EB 8 | EB 9 | EB 10 | EB 11 | EB 12 | EB 13 | EB 14 |
|---|---|---|---|---|---|---|---|
| Trimethylolpropan | | | | | | | |
| PEG 20.000[1] | 10,0 g | 10,0 g | 10,0 g | | | | |
| Lithiumperchlorat | | 8,70 g | | | 1,74 g | | |
| Natriumperchlorat[2] | 10,0 g | | | 2,00 g | | | 10,0 g |
| Calciumperchlorat[3] | | | 12,7 g | | | 2,54 g | |
| Cyanguanidin | 5,00 g | 5,00 g | 5,00 g | 10,0 g | 10,0 g | 10,0 g | |
| N,N'-Dimethylharnstoff | | | | | | | |
| Acetamid | | | | | | | |
| 2-Pyrrolidon | | | | | | | |
| Triethanolamin | | | | | | | 10,0 g |
| Epoxid[4] | | | | | | | |

[1] Handelsname Merck
[2] Monohydrat
[3] Tetrahydrat
[4] Bisphenol-A-diglycidylether

**3. Testdurchführung:**

Es wurden entsprechend nachstehend genannter Testrezeptur und Stabilisatoren gemäß Tabelle 3 Trockenmischungen 3 Minuten bei 180 °C auf einem Mischwalzwerk gewalzt. Mit den Fellen wurden 1 mm starke Pressplatten für die Farbmessungen hergestellt. Die HCl-Daten wurden mittels Kongorot-Test bestimmt.

| | | |
|---|---|---|
| Testrezeptur: (Angaben in phr) | S-PVC (K-Wert 68) | 100,00 |
| | Kreide | 5,00 |
| | $Ca(OH)_2$ | 0,10 |
| | Ceasit SW | 0,45 |
| | Mikrowachs (Baerolub LKT) | 0,50 |
| | Esterwachs (Baerolub 43 C) | 0,20 |
| | Gehärtetes Ricinusöl (Baerolub LCD) | 0,25 |
| | Zeolith | 0,30 |
| | Stabilisator* | 0,10 |

Tabelle 3: Testergebnisse

| Stabilisator* | HCl (min) | Anfangsfarbe (L*, a*, b*) | | | Bewertung |
|---|---|---|---|---|---|
| VB 1 | 16 | 58,5 | 17,3 | 31,0 | o |
| VB 2 | 17 | 70,2 | 6,8 | 45,1 | o |
| VB 3 | 18 | 68,1 | 11,1 | 47,0 | o |
| VB 4 | 17 | 67,8 | 9,7 | 44,9 | o |
| VB 5 | 14 | 64,4 | 15,8 | 35,9 | o |
| EB 1 | 20 | 73,6 | 0,9 | 34,1 | ++ |
| EB 2 | 18 | 73,5 | -0,5 | 35,9 | ++ |
| EB 3 | 20 | 68,4 | 5,8 | 40,4 | + |
| EB 4 | 17 | 70,4 | 5,6 | 40,6 | + |
| EB 5 | 19 | 73,8 | -1,3 | 31,5 | ++ |
| EB 6 | 18 | 71,2 | 4,2 | 40,9 | + |
| EB 7 | 19 | 72,0 | 4,2 | 40,8 | + |
| EB 8 | 16 | 69,7 | 5,3 | 44,1 | + |
| EB 9 | 16 | 69,4 | 5,1 | 42,0 | + |
| EB 10 | 16 | 70,3 | 4,8 | 42,6 | + |
| EB 11 | 17 | 69,7 | -0,2 | 33,9 | + |
| EB 12 | 16 | 73,5 | -0,5 | 30,6 | + |
| EB 13 | 16 | 71,9 | -0,0 | 35,6 | + |
| EB 14 | 19 | 70,9 | 1,8 | 35,5 | ++ |

Wie deutlich erkennbar ist, wird sowohl die Thermostabilität wie die Anfangsfarbe (a*-Wert) durch die erfindungsgemäßen Stabilisatoren verbessert.

**Beispiel II**

**Herstellung von Komplexkation-Perchloraten am Beispiel Calciumtriethanolaminperchlorat**

Zu 14,91 g (0,1 mol) Triethanolamin werden langsam 15,55 g Calciumperchlorattetrahydrat (0,05 mol) zugegeben. Nach Abkühlen auf Raumtemperatur erhält man das Produkt als kristallinen, weißen Feststoff.

## Patentansprüche

1. Salzzubereitung mindestens enthaltend ein Salz einer halogenhaltigen Oxysäure oder ein Gemisch aus zwei oder mehr Salzen halogenhaltiger Oxysäuren und ein Lösungsmittel oder ein Gemisch aus zwei oder mehr Lösungsmitteln, wobei das Salz einer halogenhaltigen Oxysäure oder das Gemisch aus zwei oder mehr Salzen halogenhaltiger Oxysäuren in dem Lösungsmittel oder dem Gemisch aus zwei oder mehr Lösungsmitteln bei 20 °C zu mindestens 0,1 Gew.-%, bezogen auf das Lösungsmittel oder das Gemisch aus zwei oder mehr Lösungsmitteln, löslich ist und die Salzzubereitung bei 5 °C fest ist, wobei das Kation des Salzes der halogenhaltigen Oxysäure ausgewählt ist

aus der Gruppe bestehend aus Li, Na, K, Mg, Ca, Sr, Zn, Al, La oder Ce.

2. Salzzubereitung nach Anspruch 1, **dadurch gekennzeichnet, dass** die Salzzubereitung mindestens ein organisches Lösungsmittel enthält.

3. Salzzubereitung nach Anspruch 1 oder 2, **dadurch gekennzeichnet, dass** die Salzzubereitung mindestens ein polares organisches Lösungsmittel enthält.

4. Salzzubereitung nach einem der Ansprüche 1 bis 3, **dadurch gekennzeichnet, dass** die Salzzubereitung mindestens ein Polyol als Lösungsmittel enthält.

5. Salzzubereitung nach einem der Ansprüche 1 bis 4, **dadurch gekennzeichnet, dass** die Salzzubereitung mindestens einen Aminoalkohol als Lösungsmittel enthält.

6. Salzzubereitung nach einem der Ansprüche 1 bis 5, **dadurch gekennzeichnet, dass** die Salzzubereitung Triethanolamin als Lösungsmittel umfasst.

7. Salzzubereitung nach einem der Ansprüche 1 bis 6, **dadurch gekennzeichnet, dass** die Salzzubereitung mindestens ein durch Lösungsmittelmoleküle komplexiertes Salz einer halogenhaltigen Oxysäure enthält, wobei Lösungsmittelmoleküle mindestens ein Kation oder mindestens ein Anion oder mindestens ein Kation und mindestens ein Anion eines oder mehrerer Salze halogenhaltiger Oxysäuren komplexieren.

8. Salzzubereitung, herstellbar durch das Vermischen eines Salzes einer halogenhaltigen Oxysäure oder eines Gemisches aus zwei oder mehr Salzen halogenhaltiger Oxysäuren mit einem Lösungsmittel oder einem Gemisch aus zwei oder mehr Lösungsmitteln, wobei mindestens 0,1 Gew.-% des Salzes einer halogenhaltigen Oxysäure oder des Gemisches aus zwei oder mehr Salzen halogenhaltiger Oxysäuren, bezogen auf das Lösungsmittel oder das Gemisch aus zwei oder mehr Lösungsmitteln, in diesem gelöst werden und die Salzzubereitung bei 5 °C fest wird, wobei das Kation des Salzes der halogenhaltigen Oxysäure ausgewählt ist aus der Gruppe bestehend aus Li, Na, K, Mg, Ca, Sr, Zn, Al, La oder Ce.

9. Verfahren zur Herstellung einer bei 5 °C festen Salzzubereitung nach einem der Ansprüche 1 bis 8, **dadurch gekennzeichnet, dass** durch das Vermischen eines Salzes einer halogenhaltigen Oxysäure oder eines Gemisches aus zwei oder mehr Salzen halogenhaltiger Oxysäuren mit einem Lösungsmittel oder einem Gemisch aus zwei oder mehr Lösungsmitteln mindestens 0,1 Gew.-% des Salzes einer halogenhaltigen Oxysäure oder des Gemisches aus zwei oder mehr Salzen halogenhaltiger Oxysäuren, bezogen auf das Lösungsmittel oder das Gemisch aus zwei oder mehr Lösungsmitteln, in diesem gelöst werden.

10. Verfahren nach Anspruch 9, **dadurch gekennzeichnet, dass** das Salz einer halogenhaltigen Oxysäure oder das Gemisch aus zwei oder mehr Salzen halogenhaltiger Oxysäuren durch Vermischen mit einem flüssigen Lösungsmittel oder einem Gemisch aus zwei oder mehr flüssigen Lösungsmitteln zu mindestens 0,1 1 Gew.%, bezogen auf das Lösungsmittel oder das Gemisch aus zwei oder mehr Lösungsmitteln, in diesem gelöst wird, wodurch die Salzzubereitung fest wird.

11. Verfahren nach Anspruch 9, **dadurch gekennzeichnet, dass**

a. das Lösungsmittel oder das Gemisch aus zwei oder mehr Lösungsmitteln durch Erwärmen geschmolzen,
b. das Salz einer halogenhaltigen Oxysäure oder das Gemisch aus zwei oder mehr Salzen halogenhaltiger Oxysäuren durch Vermischen mit dem Lösungsmittel oder dem Gemisch aus zwei oder mehr Lösungsmitteln zu mindestens 0,1 Gew.%, bezogen auf das Lösungsmittel oder das Gemisch aus zwei oder mehr Lösungsmitteln, in diesem gelöst
c. und die gebildete Salzzubereitung abgekühlt wird,

wodurch die Salzzubereitung fest wird.

12. Stabilisatorzusammensetzung mindestens enthaltend eine Salzzubereitung nach einem der Ansprüche 1 bis 8 oder eine gemäß einem Verfahren nach einem der Ansprüche 9 bis 11 hergestellten Salzzubereitung und mindestens einen weiteren Zusatzstoff.

**13.** Stabilisatorzusammensetzung nach Anspruch 12, **dadurch gekennzeichnet, dass** die Salzzubereitung im Wesentlichen frei von weiteren anorganischen Zusatzstoffen ist.

**14.** Verfahren zur Herstellung einer Stabilisatorzusammensetzung, **dadurch gekennzeichnet, dass** eine Salzzubereitung nach einem der Ansprüche 1 bis 8 oder eine gemäß einem Verfahren nach einem der Ansprüche 9 bis 11 hergestellte Salzzubereitung, und mindestens ein weiterer Zusatzstoff vermischt werden.

**15.** Polymerzusammensetzung, mindestens enthaltend ein halogenhaltiges Polymeres und eine Salzzubereitung nach einem der Ansprüche 1 bis 8 oder eine gemäß einem Verfahren nach einem der Ansprüche 9 bis 11 hergestellten Salzzubereitung oder eine Stabilisatorzusammensetzung nach einem der Ansprüche 12 oder 13 oder eine gemäß dem Verfahren nach Anspruch 14 hergestellten Stabilisatorzusammensetzung.

**16.** Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Salzzubereitung nach einem der Ansprüche 1 bis 8 oder einer gemäß einem Verfahren nach einem der Ansprüche 9 bis 11 hergestellten Salzzubereitung oder einer Stabilisatorzusammensetzung nach einem der Ansprüche 12 oder 13 oder einer gemäß dem Verfahren nach Anspruch 14 hergestellten Stabilisatorzusammensetzung vermischt wird.

**17.** Formkörper, mindestens enthaltend eine Salzzubereitung gemäß einem der Ansprüche 1 bis 8 oder eine nach einem Verfahren gemäß einem der Ansprüche 9 bis 11 hergestellte Salzzubereitung oder eine Stabilisatorzusammensetzung gemäß einem der Ansprüche 12 oder 13 oder eine nach einem Verfahren gemäß Anspruch 14 hergestellte Stabilisatorzusammensetzung oder eine Polymerzusammensetzung gemäß Anspruch 15.

## Claims

**1.** Salt preparation at least comprising a salt of a halogen-containing oxy acid or a mixture composed of two or more salts of halogen-containing oxy acids and a solvent or a mixture composed of two or more solvents, where the salt of a halogen-containing oxy acid or the mixture composed of two or more salts of halogen-containing oxy acids is soluble in the solvent or the mixture composed of two or more solvents at 20°C to an extent of at least 0.1% by weight, based on the solvent or the mixture composed of two or more solvents, and the salt preparation is solid at 5°C, where the cation of the salt of the halogen-containing oxy acid has been selected from the group consisting of Li, Na, K, Mg, Ca, Sr, Zn, Al, La, or Ce.

**2.** Salt preparation according to Claim 1, **characterized in that** the salt preparation comprises at least one organic solvent.

**3.** Salt preparation according to Claim 1 or 2, **characterized in that** the salt preparation comprises at least one polar organic solvent.

**4.** Salt preparation according to any of Claims 1 to 3, **characterized in that** the salt preparation comprises at least one polyol as solvent.

**5.** Salt preparation according to any of Claims 1 to 4, **characterized in that** the salt preparation comprises at least one amino alcohol as solvent.

**6.** Salt preparation according to any of Claims 1 to 5, **characterized in that** the salt preparation encompasses triethanolamine as solvent.

**7.** Salt preparation according to any of Claims 1 to 6, **characterized in that** the salt preparation comprises solvent molecules complexing at least one salt of a halogen-containing oxy acid, where solvent molecules complex at least one cation or at least one anion or at least one cation and at least one anion of one or more salts of halogen-containing oxy acids.

**8.** Salt preparation, which can be produced via the mixing of a salt of a halogen-containing oxy acid or of a mixture composed of two or more salts of halogen-containing oxy acids with a solvent or with a mixture composed of two or more solvents, where at least 0.1% by weight of the salt of a halogen-containing oxy acid or of the mixture

composed of two or more salts of halogen-containing oxy acids, based on the solvent or the mixture composed of two or more solvents, is dissolved in this and the salt preparation becomes solid at 5°C, where the cation of the salt of the halogen-containing oxy acid has been selected from the group consisting of Li, Na, K, Mg, Ca, Sr, Zn, Al, La, or Ce.

**9.** Process for the production of a salt preparation according to any of Claims 1 to 8, which is solid at 5°C, **characterized in that**, by virtue of the mixing of a salt of a halogen-containing oxy acid or of a mixture composed of two or more salts of halogen-containing oxy acids with a solvent or with a mixture composed of two or more solvents, at least 0.1% by weight of the salt of a halogen-containing oxy acid or of the mixture composed of two or more salts of halogen-containing oxy acids, based on the solvent or the mixture composed of two or more solvents, is dissolved in this.

**10.** Process according to Claim 9, **characterized in that** the salt of a halogen-containing oxy acid or the mixture composed of two or more salts of halogen-containing oxy acids is, by virtue of mixing with a liquid solvent or with a mixture composed of two or more liquid solvents, dissolved in this to an extent of at least 0.1% by weight, based on the solvent or the mixture composed of two or more solvents, and by virtue of this the salt preparation becomes solid.

**11.** Process according to Claim 9, **characterized in that**

a. the solvent or the mixture composed of two or more solvents is melted by heating,
b. the salt of a halogen-containing oxy acid or the mixture composed of two or more salts of halogen-containing oxy acids is, by virtue of mixing with the solvent or with the mixture composed of two or more solvents, dissolved in this to an extent of at least 0.1% by weight, based on the solvent or the mixture composed of two or more solvents,
c. and the resultant salt preparation is cooled,

and by virtue of this the salt preparation becomes solid.

**12.** Stabilizer composition at least comprising a salt preparation according to any of Claims 1 to 8 or a salt preparation produced by a process according to any of Claims 9 to 11 and at least one further additive.

**13.** Stabilizer composition according to Claim 12, **characterized in that** the salt preparation is substantially free from further inorganic additives.

**14.** Process for the production of a stabilizer composition, **characterized in that** a salt preparation according to any of Claims 1 to 8 or a salt preparation produced by a process according to any of Claims 9 to 11 and at least one further additive are mixed.

**15.** Polymer composition, at least comprising a halogen-containing polymer and a salt preparation according to any of Claims 1 to 8 or a salt preparation produced by a process according to any of Claims 9 to 11 or a stabilizer composition according to Claim 12 or 13 or a stabilizer composition produced by the process according to Claim 14.

**16.** Process for the stabilization of halogen-containing polymers, in which a halogen-containing polymer or a mixture composed of two or more halogen-containing polymers or a mixture composed of one or more halogen-containing polymers and of one or more halogen-free polymers is mixed with a salt preparation according to any of Claims 1 to 8 or with a salt preparation produced by a process according to any of Claims 9 to 11 or with a stabilizer composition according to Claim 12 or 13 or with a stabilizer composition produced by the process according to Claim 14.

**17.** Molding, at least comprising a salt preparation according to any of Claims 1 to 8 or a salt preparation produced by a process according to any of Claims 9 to 11 or a stabilizer composition according to Claim 12 or 13 or a stabilizer composition produced by a process according to Claim 14 or a polymer composition according to Claim 15.

## Revendications

**1.** Préparation de sel contenant au moins un sel d’un oxyacide halogéné ou un mélange de deux ou plus de deux sels d’oxyacides halogénés et un solvant ou un mélange de deux ou plus de deux solvants, le sel d’un oxyacide halogéné

ou le mélange de deux ou plus de deux sels d'oxyacides halogénés étant soluble, à 20 °C, dans le solvant ou le mélange de deux ou plus de deux solvants à raison d'au moins 0,1% en poids, par rapport au solvant ou au mélange de deux ou plus de deux solvants, et la préparation de sel étant solide à 5 °C, le cation du sel de l'oxyacide halogéné étant choisi dans le groupe constitué par Li, Na, K, Mg, Ca, Sr, Zn, Al, La et Ce.

2. Préparation de sel selon la revendication 1, **caractérisée en ce que** la préparation de sel contient au moins un solvant organique.

3. Préparation de sel selon la revendication 1 ou 2, **caractérisée en ce que** la préparation de sel contient au moins un solvant organique polaire.

4. Préparation de sel selon l'une quelconque des revendications 1 à 3, **caractérisée en ce que** la préparation de sel contient au moins un polyol en tant que solvant.

5. Préparation de sel selon l'une quelconque des revendications 1 à 4, **caractérisée en ce que** la préparation de sel contient au moins un aminoalcool en tant que solvant.

6. Préparation de sel selon l'une quelconque des revendications 1 à 5, **caractérisée en ce que** la préparation de sel comprend de la triéthanolamine en tant que solvant.

7. Préparation de sel selon l'une quelconque des revendications 1 à 6, **caractérisée en ce que** la préparation de sel contient au moins un sel d'un oxyacide halogéné, complexé par des molécules de solvant, les molécules de solvant complexant au moins un cation ou au moins un anion ou au moins un cation et au moins un anion d'un ou plusieurs sels d'oxyacides halogénés.

8. Préparation de sel, pouvant être obtenue par mélange d'un sel d'un oxyacide halogéné ou d'un mélange de deux ou plus de deux sels d'oxyacides halogénés avec un solvant ou un mélange de deux ou plus de deux solvants, au moins 0,1 % en poids du sel d'un oxyacide halogéné ou du mélange de deux ou plus de deux sels d'oxyacides halogénés, par rapport au solvant ou au mélange de deux ou plus de deux solvants, étant dissous dans celui-ci et la préparation de sel étant solide à 5 °C, le cation du sel de l'oxyacide halogéné étant choisi dans le groupe constitué par Li, Na, K, Mg, Ca, Sr, Zn, Al, La et Ce.

9. Procédé pour la production d'une préparation de sel solide à 5 °C selon l'une quelconque des revendications 1 à 8, **caractérisé en ce que** par le mélange d'un sel d'un oxyacide halogéné ou d'un mélange de deux ou plus de deux sels d'oxyacides halogénés avec un solvant ou un mélange de deux ou plus de deux solvants au moins 0,1 % en poids du sel d'un oxyacide halogéné ou du mélange de deux ou plus de deux sels d'oxyacides halogénés, par rapport au solvant ou au mélange de deux ou plus de deux solvants, est dissous dans celui-ci.

10. Procédé selon la revendication 9, **caractérisé en ce que** le sel d'un oxyacide halogéné ou le mélange de deux ou plus de deux sels d'oxyacides halogénés, par mélange avec un solvant liquide ou un mélange de deux ou plus de deux solvants liquides est dissous à au moins 0,1 % en poids dans celui-ci, par rapport au solvant ou au mélange de deux ou plus de deux solvants, de sorte que la préparation de sel se solidifie.

11. Procédé selon la revendication 9, **caractérisé en ce que**

a. on fait fondre par chauffage le solvant ou le mélange de deux ou plus de deux solvants,
b. on dissout dans celui-ci le sel d'un oxyacide halogéné ou le mélange de deux ou plus de deux sels d'oxyacides halogénés, par mélange avec le solvant ou le mélange de deux ou plus de deux solvants à au moins 0,1 % en poids, par rapport au solvant ou au mélange de deux ou plus de deux solvants
c. et on refroidit la préparation de sel formée,

de sorte que la préparation de sel se solidifie.

12. Composition de stabilisant au moins contenant une préparation de sel selon l'une quelconque des revendications 1 à 8 ou une préparation de sel produite conformément à un procédé selon l'une quelconque des revendications 9 à 11 et au moins un autre additif.

13. Composition de stabilisant selon la revendication 12, **caractérisée en ce que** la préparation de sel est pratiquement

exempte d'autres additifs inorganiques.

**14.** Procédé pour la préparation d'une composition de stabilisant, **caractérisé en ce qu'**on mélange une préparation de sel selon l'une quelconque des revendications 1 à 8 ou une préparation de sel produite conformément à un procédé selon l'une quelconque des revendications 9 à 11 et au moins un autre additif.

**15.** Composition de polymère, au moins contenant un polymère halogéné et une préparation de sel selon l'une quelconque des revendications 1 à 8 ou une préparation de sel produite conformément à un procédé selon l'une quelconque des revendications 9 à 11 ou une composition de stabilisant selon l'une quelconque des revendications 12 et 13 ou une composition de stabilisant préparée conformément au procédé selon la revendication 14.

**16.** Procédé pour la stabilisation de polymères halogénés, dans lequel on mélange un polymère halogéné ou un mélange de deux ou plus de deux polymères halogénés ou un mélange d'un ou plusieurs polymères halogénés et d'un ou plusieurs polymères exempts d'halogène avec une préparation de sel selon l'une quelconque des revendications 1 à 8 ou une préparation de sel produite conformément à un procédé selon l'une quelconque des revendications 9 à 11 ou une composition de stabilisant selon l'une quelconque des revendications 12 et 13 ou une composition de stabilisant préparée conformément au procédé selon la revendication 14.

**17.** Corps moulé, au moins contenant une préparation de sel selon l'une quelconque des revendications 1 à 8 ou une préparation de sel produite conformément à un procédé selon l'une quelconque des revendications 9 à 11 ou une composition de stabilisant selon l'une quelconque des revendications 12 et 13 ou une composition de stabilisant préparée conformément à un procédé selon la revendication 14 ou une composition de polymère selon la revendication 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0457471 B
- DE 10109366
- EP 1046668 A
- EP 433230 A
- EP 256872 A
- DE 4106411 C
- DE 4106404 C
- DE 4106404 A
- DE 4002988 A
- EP 0742259 A
- DE 4204887
- EP 0259783 A


### In der Beschreibung aufgeführte Nicht-Patentliteratur


- **R. Gächter/H. Müller.** Kunststoffadditive. Carl Hanser Verlag, 1989, 478-488
- **R. Gächter ; H. Müller.** Kunststoffadditive. Carl Hanser Verlag, 1989, 412-415
- **W. V. Titow.** PVC Technology. Elsevier Publishers, 1984, 165-170
- Taschenbuch der. Kunststoffadditive. 408-412
- **R. Gächter ; H. Müller.** Kunststoffadditive. Carl Hanser Verlag, 1989, 422-425
- KUNSTSTOFFADDITIVE. 422
- **E. J. Wickson.** Handbook of PVC Formulating. John Wiley & Sons, Inc, 1993, 393-449
- **R. Gächter ; H. Müller.** Taschenbuch der Kunststoffadditive. Carl Hanser Verlag, 1990, 549-615
- **R. Keßler ; H. Müller.** Kunststoff Additive. Carl Hanser Verlag, 1989
- **E.J. Wilson.** Handbook of PVC Formulating. J. Wiley & Sons, 1993